# EUROPEAN PATENT APPLICATION

(11) **EP 2 130 667 A1**
(43) Date of publication of application: **09.12.2009**
(21) Application number: 09162014.6
(22) Date of filing: 05.06.2009
(51) Int. Cl.: B29D 11/00, B32B 27/08, B32B 27/30, B32B 27/34, B32B 27/40, G02B 27/28, G02B 1/04, G02B 1/08, G02B 1/10, G02B 5/30

(54) **Polarizing laminate and process for producing the same**

(30) Priority: 05.06.2008 JP 2008148083
(71) Applicant: YAMAMOTO KOGAKU CO., LTD., Osaka 577-0056 (JP)
(72) Inventor: Kobuchi, Nobuyuki, Osaka 577-0056 (JP); Yoshikawa, Keishi, Osaka 577-0056 (JP); Oka, Koichiro, Osaka 577-0056 (JP)
(74) Representative: Vossius & Partner

(57) **Abstract**

An object of the present invention is to provide a polarizing laminate which is resistant to impact, has the high polarization degree, hardly causes a solvent crack, and hardly causes a fine crack even when perforation-processed, for example, goggles, sunglasses, prescription sunglasses, and shields which are resistant to impact, have higher stability, and can effectively prevent glare.

There is provided a polarizing laminate comprising two protective sheets having approximately the same thickness, and a polarize sheet held by them, wherein a protective sheet and a polarizer sheet are adhered, the protective sheet is any of a polyamide-based resin sheet, and a polyurethane-based resin sheet, and the laminate has the function as an optical lens.

## Description

The present invention relates to techniques of providing a polarizing laminate which is impact resistant. Inter alia, the present invention relates to the technique of providing an optical lens having polarizing performance suitable for goggles, sunglasses, prescription sunglasses, and shields.

Goggles and spectacles fitted with a resin lens having the polarizing function are used for the purpose of preventing glare with direct sunlight or reflected light and protecting eyes from wind, snow, rain, seawater, water, sand, chemicals, and foreign matters, in the sports field such as skiing, snowboarding, ice skating, yachting, boating, biking, and autobiking, the industrial field such as general manufacturing industry, and construction and civil engineering, and the normal outdoor life.

As one embodiment of a resin lens having the polarizing function which has previously been used, there is a casting molding method polarizing lens made by a method of filling a raw material monomer into a mold with a polarizer sheet inserted therein, upon casting molding of a lens, followed by polymerization. A representative polarizing lens of a casting molding method is a polarizing CR39 lens.

In addition, as another embodiment of the resin lens having the polarizing function, there is a polarizing polycarbonate lens obtained by an insert injection-molding method by bending-processing a polycarbonate polarizing plate holding a polarizer sheet between two polycarbonate protective sheets in a lens manner, inserting it into a mold, and further thermally adhering a polycarbonate resin layer on a concave side of a lens (JP-A No. 8-52817).

In addition, one embodiment of the insert injection-molding method, there are a polarizing transparent nylon lens and a polarizing polyurethane lens obtained by adhering a transparent nylon resin or a polyurethane resin sheet to one side of an acetylcellulose-based polarizing plate or a polycarbonate polarizing plate made of an acetylcellulose-based protective sheet, and bending-processing this, followed by insert-injection molding of a transparent nylon resin or a polyurethane resin (JP-A No. 2002-189199).

The casting method polarizing lens such as the polarizing CR39 lens has a defect that it is generally weak in an impact resistance strength. In order to supplement such the defect, a polarizing polycarbonate lens began to be made.

However, the polarizing polycarbonate lens has a defect that it is weak to surfactants and many organic chemicals such as benzene and toluene, a representative of which is solvent crack seen when contacted with an organic solvent. The solvent crack deteriorates appearance of a lens, and weakens an impact resistance strength.

In addition, the polarizing polycarbonate lens also has a problem that when the lens is perforation-processed, a fine crack occurs at a periphery of a hole.

The polarizing transparent nylon lens and the polarizing polyurethane lens seen in JP-A No. 2002-189199 have a problem that impact resistance and water resistance of an acetylcellulose-based protective sheet are low, and a fine crack of the protective sheet occurs near a hole at perforation processing.

The technical means of the present invention for solving the aforementioned technical problems comprises a polarizing laminate comprising two protective sheets having approximately the same thickness, and a polarizer sheet held by them, wherein the protective sheet and the polarizer sheet are adhered, the protective sheet is a polyamide-based resin sheet or a polyurethane-based resin sheet, more preferably a polyamide-based resin sheet or a polyurethane-based resin sheet prepared in the range of the stretching rate of 1.05- to 4-fold, and the laminate has the function as an optical lens.

Other technical means of the present invention is that the polarizing laminate is bending-processed.

Other technical means of the present invention is that a polyamide-based resin molded body or a polyurethane-based resin molded body is adhered or thermally fused on a concave side of the bending-processed polarizing laminate.

Other technical means of the present invention is that a polyamide-based resin molded body or a polyurethane-based resin molded body is injection-molded on a concave side of the bending-processed polarizing laminate.

According to the present invention, there can be provided a polarizing laminate which is impact resistant, has the high polarization degree, hardly causes a solvent crack to an organic chemical such as a surfactant, and hardly causes a fine crack at a periphery of a hole even when perforation-processed, and a process for producing the same. When the present product is used, goggles, sunglasses, prescription sunglasses, and shields which are impact resistant, have higher safety, and can more effectively prevent glare can be provided.

The polarizing laminate of the present invention takes a laminated structure in which the polarizer sheet is held by two protective sheets.

The polarizer sheet is usually a monoaxially stretched sheet of a polyvinyl alcohol having the uniform sheet thickness of 0.15 mm or less. The polyvinyl alcohol polarizing sheet is manufactured by adsorbing (doping) iodine or a dichromic dye onto a sheet at an unstretched stage before stretching, and stretching this in warm water with boric acid or a metal ion added thereto at a few-fold rate in a monoaxial direction.

The iodine doping method imparts little inherent coloring to the polarizer sheet, and easily affords the high polarization degree, but conversely is inferior in heat resistance, as compared with the dye doping method. The dye doping method has higher heat resistance, but a hue inherent to a doping dye appears in the polarizing sheet, and the visible light transmittance is easily reduced.

In the present invention, as a process for manufacturing the polarizer sheet, any of the iodine doping method and the dye doping method may be used, but the dye doping method having high heat resistance is more recommended.

As the resin used in the protective sheet in the present invention, resins having a high impact resistance strength and high transparency are preferable. Among them, a polyamide-based resin and a polyurethane-based resin are particularly preferable from a view point of solvent crack resistance, and fine crack resistance at perforation processing.

The polyamide-based resin preferably used in the present invention is a polymer in which an amino group and a carboxyl group are condensed, and it is preferable that the resin is thermoplastic from a view point of easy processing into sheets.

Examples of a diamine component for obtaining a thermoplastic polyamide-based resin include hexamethylenediamine, m-xylyleneamine, bis(p-aminocyclohexyl)methane, 3,3-dimethyl-4,4-diaminodicyclohexylmethane, and trimethylhexamethylenediamine, and examples of a dicarboxylic acid component include adipic acid, dodecanedioic acid, isophthalic acid, and terephthalic acid.

In addition, ring opening polycondensates of lactams such as ε-caprolactam can make a thermoplastic polyamide-based resin.

As such the polyamide-based resin, there are nylon 6, nylon 66, nylon 610, nylon 12, and so-called transparent nylon.

Among them, a polyamide-based resin having the haze value measured as the protective sheet of 2% or less, preferably 1.5% or less, and the Shore A hardness measured according to ISO868 of 75 or more, preferably 80 or more is suitable in the present invention.

When the haze value exceeds 2%, transparency of the polarizing laminate of the present invention tends to be deteriorated. On the other hand, when the Shore A hardness is less than 75, a surface hardness of the polarizing laminate is reduced, and a flaw is easily imparted. In addition, even when a surface of the polarizing laminate is hard coat-treated, there is a tendency that a sufficient surface hardness is hardly imparted at the Shore A hardness of less than 75.

As the polyamide-based resin satisfying such the haze value and Shore A hardness, there is an amorphous or microcrystalline transparent nylon, and GRILAMID TR55, GRILAMID TR90, and GRILAMID TR90UV of EMS-CHEMIE, TROGAMID CX7323 of DEGUSSA, and RILSAN CLEAR G350 of ARKEMA may be exemplified.

The polyurethane-based resin preferably used in the present invention is an addition polymer of an isocyanate group and a hydroxy group and is preferably thermoplastic from a view point of easiness of processing into a sheet. Straight polyurethane of diisocyanate, and a compound having two hydroxy groups in the molecule is preferably used.

As diisocyanate for obtaining such the polyurethane, there are aromatic diisocyanates such as tolylene diisocyanate (TDI), meta-xylene diisocyanate (MDI), diphenylmethane-4,4'-diisocyanate, diphenylether-4,4'-diisocyanate, and 1,5-naphthalene diisocyanate, and aliphatic diisocyanates such as hexamethylene diisocyanate, isophorone diisocyanate, hydrogenated TDI, and hydrogenated MDI.

As the compound having two hydroxy groups in the molecule, there are aliphatic glycols such as ethylene glycol, 1,3-propane glycol, 1,4-butane glycol, and 1,6-hexane glycol, polyether-based glycols such as polyethylene glycol, polypropylene glycol, polyethylene/propylene glycol, and polytetramethylene glycol, ester-based glycols such as caprolactone, adipate, and copolyester, carbonate-based glycols, and aromatic ring-containing glycols such as bisphenol A, ethylene oxide adduct of bisphenol A, and propylene oxide adducts of bisphenol A.

As the straight polyurethane, inter alia, polyurethane having the haze value measured as the protective sheet of 2% or less, preferably 1.5% or less, and the Shore A hardness measured according to ISO868 of 75 or more, preferably 80 or more is suitable in the present invention.

When the haze value exceeds 2%, there is a tendency that transparency of the polarizing laminate is deteriorated. On the other hand, when the Shore A hardness is less than 75, a surface hardness of the polarizing laminate is reduced, and a flaw is easily imparted. Even when a surface of the polarizing laminate is hard coat-treated, there is a tendency that a sufficient surface hardness is hardly imparted at the Shore A hardness of less than 75.

Examples of the polyurethane-based resin satisfying such the haze value and the Shore A hardness include polyurethanes of aromatic diisocyanates or aliphatic diisocyanates, and polyether-based ethers, or polyester-based glycols.

As one example thereof, polyester-based polyurethane ELASTOLLAN ET590, ELASTOLLAN ET595, and ELASTOLLAN ET598 of BASF, and polyether-based polyurethane of the same company can be exemplified.

The protective sheet used in the present invention is a sheet of the aforementioned polyamide-based resin or polyurethane-based resin having the thickness of 0.05 to 1 mm, preferably 0.1 to 0.9 mm. When the thickness is less than 0.05 mm, a strength of the polarizing laminate is easily reduced. On the other hand, when the thickness exceeds 1 mm, in the case of bending-processing of the polarizing laminate into a spherical surface, there is a tendency that processing becomes difficult.

Such the protective sheet can be made by a solvent casting method, a melt pressing method, or an extrusion molding method. From a view point of substantially no molecular orientability, the solvent casting method and the melt pressing method are preferable, but there is a problem of low productivity. In view of productivity, the extrusion molding method is preferable.

One embodiment of the extrusion molding method will be described. There is a method as follows: a resin melt-extruded through a transversely long slit is received by a grasping device or a take-off roll, and a film is made while extending in a biaxial direction with the grasping device or in a monoaxial direction with the take-off roll, or without extension (T die method).

In the method of extension in a biaxial direction, a film making apparatus becomes large scale, and the thickness, and molecular orientability of the resin tend to be hardly controlled, and take-off in a monoaxial direction is recommended.

The monoaxial extrusion molding method is a method of making a continuous sheet while successfully cooling a melted resin discharged through a slit with a few take-off rolls. Finally, the sheet is wound in a roll manner, or cut.

The sheet thickness and molecular orientability can be controlled by a take-off rate v of a first roll which receives a melted resin, and a take-off rate V of a final roll.

When the already finished unstretched sheet is stretched by a batchwise system, they can be controlled by a feed rate v of the unstretched sheet and a take-off rate V of a final roll.

When the sheet temperature is the glass transition temperature of the resin or higher, even if V is greater than v, a continuous sheet can be made without breakage. Now, letting V/v to be a stretching rate, the present invention is preferably applied at V/v of 1.05 to 5, more preferably 1.1 to 4.5.

When V/v exceeds 5, there is a tendency that the sheet is easily broken, and an optical strain in a width direction of the sheet is easily varied. When V/v is less than 1.05, there is a tendency that an optical strain in a width direction of the sheet is easily varied. A variation of the optical strain is observed as color heterogeneity when the sheet is held between two polarizing plates.

The protective sheet of the polyamide-based resin and the polyurethane-based resin used in the present invention may contain antioxidants, releasing agents, ultraviolet absorbing agents, infrared absorbing agents, coloring matters such as light modulating coloring matters, and antistatics.

The polarizing laminate of the present invention can be produced by overlaying the protective sheet of the polyamide-based resin or the polyurethane-based resin on both sides of the polarizer sheet, and adhering them.

Thereupon, the protective sheet to be adhered may have both sides of a polyamide-based resin, or a polyurethane-based resin. Alternatively, the polyamide-based resin and the polyurethane-based resin may be adhered on one side, respectively.

For adhesion, an adhesive or a pressure-sensitive adhesive which has high transparency, is hardly yellowed with time, and is excellent in heat resistance is used. Examples include polyurethane-based, polythiourethane-based, epoxy-based, vinyl acetate-based and acryl-based adhesives, or pressure-sensitive adhesives.

These adhesives or pressure-sensitive adhesives are uniformly coated on the protective sheet or the polarizer sheet by a normally used coating method such as a gravure coating method, and an offset coating method. Coating on both sides of the polarizer sheet having a low strength is more recommended than coating on one side of the protective sheet having a strength, from a view point of workability.

The thickness of the adhesive layer or the pressure-sensitive adhesive layer is 1 to 100 µm, preferably 1.5 to 80 µm. When the thickness of the adhesive layer or the pressure-sensitive adhesive layer is less than 1 µm, a connecting force is low and, when the thickness exceeds 100 µm, the adhesive or the pressure-sensitive bleeds out from an edge face of the polarizing laminate in some cases.

The polarizing laminate after adhesion is wound on a roll having the great diameter, or cut into a sheet. The polarizing sheet becomes to have the thickness of around 2 mm or less.

The polarizing laminate of the present invention can be used as an optical lens of sunglasses, goggles or shields, as it is, or by bending. When the laminate is bent, the laminate is usually bent into a cylinder or a spherical surface.

The curved shape includes a cylinder shape and a spherical shape. In the case of the cylinder shape, the laminate can be bent into a cylinder shape only by setting in a lens fitting groove of goggles or shields without bending processing in advance in some cases, but in the case of a spherical shape, bending processing is necessary in advance.

Bending processing is easily performed when the polarizing laminate is cut into small sheet pieces in advance. The cut small sheet pieces are set into a mold having a spherical shape or a cylinder shape, this is heat-pressed at the temperature of the glass transition temperature or lower, or sucked under reduced pressure in the atmosphere of the glass transition temperature or higher, thereby, thermal shaping is conducted.

In any case, the thickness of the polarizing laminate is preferably 0.5 to 2 mm, more preferably 1 to 1.7 mm.

When the thickness of the polarizing laminate is 0.5 mm or less, a strength as the optical lens is deficient and, when the thickness exceeds 1.7 mm, a refracting force on a minus side which is increased nearer a lens end becomes prominent, and a visual strain is easily caused.

As one embodiment of the present invention, a polarizing laminate is bending-processed into a spherical shape or a cylinder shape, a polyamide-based resin molded article, or a polyurethane-based resin molded body is adhered to a concave side (adhesion method), or thermally fused on the concave side (heat fusing method), or is insert injection-molded to obtain an optical lens, in some cases. The preferable thickness of the polarizing laminate which is suitable for this purpose is 0.3 to 1.4 mm, more preferably 0.4 to 1.2 mm.

When the thickness of the polarizing laminate in this case is less than 0.3 mm, it is difficult to manufacture the polarizing laminate and, when the thickness exceeds 1.4 mm, the thickness of an injection-molded layer necessary as a lens when insert injection molding is further performed on a concave side becomes small, and injection molding can not be conducted well, in some cases.

The adhesion method is a method of making a lens-like molded body provided with a concave side having the same shape as the shape on a concave side of the bending-processed polarizing laminate by injection molding, or by bending-processing of a sheet in advance, and adhering this to a concave side of the polarizing laminate with an adhesive or a pressure-sensitive adhesive of polyurethane, polythiourethane, epoxy, vinyl acetate or acryl, which has the high transparency degree, is hardly yellowed with time, and is excellent in heat resistance.

In order to increase an adhering force, adhesion surfaces of the polarizing laminate and the lens-like molded body are plasma-treated, corona discharge-treated, or acid alkali treated in some cases.

It is preferable that the lens-like molded body to be adhered to a concave side is a polyamide-based resin or a polyurethane-based resin, from a view point of an impact resistance strength, solvent crack resistance, and fine crack resistance at perforation-processing of a lens.

It is recommended that the lens-like molded body has the haze value of that portion of 2% or less, preferably 1.5% or less, and the Shore A hardness as measured according to ISO868 of 75 or more, preferably 80 or more.

When the haze value exceeds 2%, there is a tendency that transparency of an optical lens is deteriorated. In addition, when the Shore A hardness is less than 75, a surface hardness of an optical lens is reduced, and a surface is easily given a flaw. In addition, even when a surface of a finished optical lens is hard coat-treated, there is a tendency that a sufficient surface hardness is hardly imparted at the Shore A hardness of less than 75.

When the polarizing laminate of the present invention is used as an optical lens, sunglasses, goggles, prescription lenses, or shields do not require a superior resistance force to impact blow or flying objects, but a hardly bending lens, that is, great drape of a lens increases a resistance force thereto.

From such the point of view, it is recommended that the polyamide-based resin, or the polyurethane-based resin used in the lens-like molded body has the Shore D hardness as measured according to ISO868 of 65 or more, preferably 70 or more.

Alternatively, it is recommended that the flexural modulus as measured according to ISO178 is 1000 MPa or more, preferably 1100 MPa.

When the Shore D hardness is less than 65, or when the flexural modulus is less than 1000 MPa, a lens is easily bent and, depending on a kind of a frame, a lens is easily dropped off from the frame with an external force such as impact blow.

The polyamide-based resin, or the polyurethane-based resin for a most preferable lens-like molded body in the present invention has the Shore D hardness as measured according to ISO868 of 65 or more, preferably 70 or more, and the flexural modulus as measured according to ISO178 of 1000 MPa or more, preferably 1100 MPa or more.

It is recommended that the thickness of 0.7 mm or more, preferably 0.8 mm or more is used in the lens-like molded body. When the thickness is less than 0.7 mm, injection molding is difficult, and the reinforcing effect to an impact resistance strength is deficient, the significance of adhesion to the polarizing laminate may be lost.

When the thickness is the same over a whole region of the lens-like molded body, a lens becomes an optical lens having no correction power (no prescription lens). However, when the thickness as an optical lens exceeds 1.7 mm, even in the case of a spherical shape, a minus side refracting force which increases nearer a lens end becomes prominent, and a visual strain is easily caused. As strategy for such the case, elimination of a minus refracting force is preferably performed by gradually decreasing the thickness towards a lens edge face to impart a plus side refracting force.

When correction power is imparted to the lens-like molded body (when a prescription lens is made), correction power of an optical lens is regulated by regulating or designing a refracting force of the lens-like molded body.

When power has directionality as in an astigmatic lens, a progressive-power lens or a bifocal lens among the prescription lens, adhesion is performed so that a direction of a polarization axis and a direction of power of the lens-like molded body are brought into a suitable relationship.

The resin used in the lens-like molded body may contain antioxidants, releasing agents, ultraviolet absorbing agents, infrared absorbing agents, coloring matters such as light modulating coloring matters, and antistatics.

A thermally fusing method of thermally fusing a polyamide-based molded body, or a polyurethane-based molded body on a concave side of a bending-processed polarizing laminate is, fundamentally, preferably an insert injection molding method shown in Japanese Patent Application No. 49707/1998 (JP-A No. 11-245259), from a view point of productivity and precision.

That is, the method is a method of arranging a polarizing laminate with a surface to be thermally fused directed innerwardly on one side of a mold, and insert injection-molding a resin layer. Inter alia, since an injection compression molding method takes a method of injecting a resin into a mold at a low pressure, closing the mold with a high pressure, and imparting a compressing force to the resin, a molding strain, or optical anisotropy due to local orientation of a resin molecule at molding is hardly caused in a molded body. In addition, by controlling a mold compressing force which is uniformly applied to the resin, since the resin can be cooled at a constant specific volume, a molded article having a high dimensional precision is obtained.

A resin used in insert injection molding in the present invention is basically a polyamide-based resin, or a polyurethane-based resin due to necessity of thermal fusing with a polyamide-based resin, or a polyurethane-based resin.

Among them, in the case of a polyamide-based resin, or a polyurethane-based resin which is the same as that of the protective sheet on a thermal fusing side, since thermal fusing is easy, and there is no difference in a refractive index at a thermal fusing interface, useless reflection is suppressed at an interface, and a more preferable optical lens is obtained.

When a polyurethane-based resin is injection-molded on the protective sheet of a polyamide-based resin, or when a polyamide-based resin is injection-molded on the protective sheet of a polyurethane-based resin, thermal fusing is possible in some cases.

It is recommended that the resin to be insert injection-molded has the haze value of that part of 2% or less, preferably 1.5 %or less, the Shore A hardness of the resin as measured according to ISO868 of 75 or more, preferably 80 or more.

When the haze value exceeds 2%, there is a tendency that transparency of an optical lens is deteriorated. In addition, when the Shore A hardness is less than 75, a surface hardness of an optical lens becomes small, and a flaw is easily imparted. In addition, even when a surface of an optical lens is hard coat-treated, there is a tendency that a sufficient surface hardness is hardly obtained at the Shore A hardness of less than 75.

The polarizing laminate of the present invention is used as an optical lens. Like the adhesion method, also in the thermal fusing method, a superior resistance force to an external force, particularly, such as impact blow and flying objects is not required, but a hardly bending lens, that is, strong drape of a lens increases a resistance force thereto.

From such the point of view, it is recommended that a resin to be insert injection-molded has the Shore D hardness as measured according to ISO868 of 65 or more, preferably 70 or more.

Alternatively, it is recommended that the flexural modulus as measured according to ISO178 is 1000 MPa or more, preferably 1100 MPa or more.

When the Shore D hardness is less than 65, or when the flexural modulus is less than 1000 MPa, a lens is easily bent and, depending on a kind of a frame, the lens is easily dropped off from the flame with an external force such as impact blow.

The insert injection-molding resin most preferable in the present invention has the Shore D hardness as measured according to ISO868 of 65 or more, preferably 70 or more, and the flexural modulus as measured according to ISO178 of 1000 MPa or more, preferably 1100 MPa or more.

In addition, it is recommended that a resin part to be insert injection-molded has the thickness of 0.7 mm or more, preferably 0.8 mm or more. When the thickness is less than 0.7 mm, insert injection molding is difficult, and the reinforcing effect to an impact resistance strength is deficient, and there is a possibility that significance of adhesion to the polarizing laminate may be lost.

When the thickness is the same over a whole region of the resin part to be insert injection-molded, as in the adhesion method, no prescription lens is obtained. However, when the thickness as an optical lens exceeds 1.7 mm, like the adhesion method, even in the case of a spherical shape, a minus side refracting force which is increased nearer a lens edge face becomes prominent, and a visual strain is easily caused. As strategy in that case, elimination of a minus refracting force is preferably performed by gradually decreasing the thickness towards a lens edge face to impart a plus side refracting force.

When prepared into a corrective lens, a refracting force of a resin part to be insert injection-molded is regulated and designed so.

When power has directionality as in an astigmatic, a progressive-power lens and a bifocal lens among a prescription lens, like the adhesion method, the polarizing laminate bending-processed so that a direction of a polarization axis and a direction of power of a resin part to be insert injection-molded are brought into a suitable relationship, is set into a mold.

A resin to be insert injection-molded may contain antioxidants, releasing agents, ultraviolet absorbing agents, infrared absorbing agents, coloring matters such as light modulating coloring matters, and antistatics.

The polarizing laminate of the present invention is used as an anti-glare optical lens such as sunglasses, corrective lenses, goggles, shields, in many cases. For this reason, as a preferable embodiment, it is recommended that the polarization degree as an optical lens is adjusted to 50% or more, and the visual light transmittance is adjusted to 10 to 75%, inter alia, 15 to 70%.

When the polarization degree is less than 50%, the glare preventing effect may be reduced and, when the visual light transmittance is less than 10%, the sight is too dark, becoming a disorder of an action. On the other hand, when the visual light transmittance exceeds 75%, the effect of alleviating glare is reduced.

The visual light transmittance can be controlled by the polarization degree of the polarizer sheet and, additionally, this can be supplemented by incorporating a coloring matter such as a dye and a pigment into the polarizer sheet, the protective sheet or a lens-like molded body, or the resin part to be insert injection-molded, or an adhesive or a pressure-sensitive adhesive which adheres the polarizer sheet and the protective sheet, or an adhesive or a pressure-sensitive adhesive for adhering the lens-like molded body, or staining them.

The coloring matter used in them may be any of a dye and a pigment, and the dye is generally preferable from a view point of the transparency feeling. On the other hand, from a view point of long durability to water, heat or light, the pigment is generally preferable.
A kind of the dye or the pigment is not particularly limited as far as it has long term durability performance to color fading. Generally, azo-based, anthraquinone-based, indigoid-based, triphenylmethane-based, xanthene-based, and oxazine-based dyes are included. In addition, as the pigment, organic pigments such as phthalocyanine-based, quinacridone-based and azo-based pigments and inorganic pigments such as Ultramarine Blue, Chrome Green, and Cadmium Yellow are included.

It is preferable that an optical lens using the polarizing laminate of the present invention has a surface which has been hard coat-processed. The hard coating may be any type of hard coating which is generally used, such as thermosetting hard coating such as silane, and epoxy coatings, and active light ray curing-type hard coating such as acryl, and epoxy coatings.

Hard coating is imparted at the film thickness of around 0.5 to 15 µm, and hard coat processing is conducted on coating of a primer coating layer such as acrylate for the purpose of improving adherability, in some case.

In addition, in an optical lens using the polarizing laminate of the present invention, it is preferable that at least any side is reflection prevention-processed. In reflection prevention processing, usually, about 2 to 8 layers of inorganic films having different refractive indeces between adjacent layers are laminated on a hard coat at the optical film thickness by a vacuum deposition method, or about 1 to 3 layers of organic films are laminated at the optical film thickness by a wet process.

In addition, in an optical lens using the polarizing laminate of the present invention, it is preferable that at least any side is anti-fogging-processed. In anti-fogging processing, a polyvinyl alcohol-based or polyvinylpyrrolidone-based hydrophilic resin or a surfactant is imparted at the film thickness of about 1 to 50 µm.

In addition, in an optical lens using the polarizing laminate of the present invention, it is preferable that at least any side is anti-stain processed. In anti-stain processing, usually, a fluorine-based organic compound is imparted at the film thickness of an order of a few tens mm to ten and a few µm by a vacuum deposition method or a wet process, for the purpose of preventing contamination such as fingerprint staining of a reflection preventing film, and allowing for easy wiping-off.

In addition, in an optical lens using the polarizing laminate of the present invention, it is preferable that at least any side is mirror-processed. In mirror-processing, a metal film such as aluminum, silver, gold and platinum, or a metal oxide film is imparted by a vacuum deposition method.

Then, the present invention will be specifically described by way of Examples, but the present invention is not limited to them.

### Example 1

TR90UV transparent nylon (Shore D hardness 82, flexural modulus 1530 MPa) of EMS was extruded through a T die, and wound with a roll to make an unstretched continuous sheet.

This sheet was monoaxially stretched 2.5-fold (V/v=2.5) in the atmosphere at 165°C to obtain a protective sheet of transparent nylon having the final thickness of about 600 µm.

A polyvinyl alcohol film was stained gray with a dichromic dye, stretched 5-fold in a monoaxial direction in a staining bath, and dried under the tension state to obtain a polarizer having the thickness of 150 µm.

The polyvinyl alcohol polarizer was held between the two transparent nylon protective sheets, and these were adhered with a polyurethane-based adhesive to make a polarizing laminate having the thickness of about 1.45 mm. The polarization degree of the resulting polarizing laminate is 97%, and the visible light transmittance is 33%.

The polarizing laminate was bending-processed by a press molding method to obtain a lens. When one polarizing plate was held on a concave side of the lens, and transmitted light was observed from a concave side, color heterogeneity due to the protective sheet of transparent nylon was not observed. In addition, even when the same thing was conducted on a convex side, and this was observed from a convex side, color heterogeneity was not observed.

A silane-based thermosetting type hard-coated film having the thickness of 4 µm was imparted to both sides of the lens by a dipping method. When a lens surface was frictioned with a steel wool, and a surface hardness was observed, the surface had the sufficient surface hardness, and had the optically and surface hardnessly sufficient function as sunglasses.

An edge face of the hard-coated lens was abraded with a round edge rubbing machine, and a solvent crack test with a surfactant was performed by the following method. That is, an edge face of the lens after round edge rubbing was held diagonally with a vice, a stress was applied to the lens, a surfactant Family Fresh of Kao Corporation (a main component is alkyl ether sulfuric acid ester sodium salt) was coated on an edge face, and allowed to stand in the environment at 50°C for 1 week. No solvent crack occurred at a part coated with the surfactant.

Separately, the hard-coated lens was perforation-processed with an electric drill having the diameter of 1 mm. No crack occurred at a periphery of a hole. Example 2

TR90UV transparent nylon of EMS was extruded through a T die, and wound with a roll to make an unstretched continuous sheet.

This sheet was monoaxially stretched 3.2-fold (V/v=3.2) in the atmosphere at 162°C to obtain a protective sheet of transparent nylon having the final thickness of 300 µm.

A polyvinyl alcohol film was stained gray with a dichromic dye, stretched 5-fold in a monoaxial direction in a staining bath, and dried under the tension state to obtain a polarizer having the thickness of 150 µm.

The polyvinyl alcohol polarizer was held between the two transparent nylon protective sheets, and these were adhered with a polyurethane-based adhesive to make a polarizing laminate having the thickness of 810 µm. The polarization degree of the resulting polarizing laminate is 97%, and the visible light transmittance is 32%.

The polarizing laminate was bending-processed by a press molding method to obtain a lens-like laminate. When one polarizing plate was held on a concave side of the lens-like laminate, and transmitted light was observed from a concave side, color heterogeneity due to the protective sheet of transparent nylon was not observed. In addition, even when the same thing was conducted on a convex side, and this was observed from a convex side, no color heterogeneity was observed.

A convex side of the lens-like laminate was set into a concave mold, and a cavity for molding was formed between a convex mold while sucked onto a molding surface of a concave mold with a sucking pore provided in the concave mold.

In order to thermally fuse a polyamide-based resin molded body on a concave side of the lens-like laminate, TR90UV transparent nylon was insert injection-molded to make a polarizing laminate having the lens thickness of about 2.0 mm.

A silane-based thermosetting type hard-coated film was imparted to both sides of the lens by a dipping method. When a lens surface was frictioned with a steel wool, and a surface hardness was observed, the surface had the sufficient surface hardness, and had the optically and surface hardnessly sufficient function as sunglasses.

An edge face of the hard-coated lens was abraded with a round edge rubbing machine, and a solvent crack test was performed by the method of Example 1, and no solvent crack occurred at a part coated with the surfactant.

Separately, the hard-coated lens was perforation-processed with an electric drill having the diameter of 1 mm. No crack occurred at a periphery of a hole.

### Example 3

TROGAMID CX7323 transparent nylon (Shore D hardness 81, flexural modulus 1700 MPa) of DEGUSSA was extruded through a T die, and wound with a roll to make an unstretched continuous sheet.

This sheet was monoaxially stretched 4.0-fold (V/v=4.0) in the atmosphere at 147°C to obtain a protective sheet of transparent nylon having the final thickness of 320 µm.

A polyvinyl alcohol film was stained gray with a dichromic dye, stretched 5-fold in a monoaxial direction in a staining bath, and dried under the tension state to obtain a polarizer having the thickness of 150 µm.

The polyvinyl alcohol polarizer was held between the two transparent nylon protective sheets, and these were adhered with a polyurethane-based adhesive to make a polarizing laminate having the thickness of 860 µm. The polarization degree of the resulting polarizing laminate is 97%, and the visible light transmittance is 33%.

The polarizing laminate was bending-processed by a press molding method to obtain a lens-like laminate. When one polarizing plate was held on a concave side of the lens-like laminate, and transmitted light was observed from a concave side, color heterogeneity due to the protective sheet of transparent nylon was not observed. In addition, even when the same thing was performed on a convex side, and this was observed from a convex side, no color heterogeneity was observed.

A convex side of the lens-like laminate was set into a concave mold, and a cavity for molding was formed between a convex mold while sucked onto a molding surface of the concave mold with a suction pore provided in the convex mold.

In order to thermally fuse a polyamide-based resin molded body on a concave side of the lens-like laminate, TROGAMID CX7323 transparent nylon was insert injection-molded to make a polarizing laminate having the lens thickness of about 2.2 mm.

A silane-based thermosetting type hard-coated film having the thickness of 4 µm was imparted to both sides of the lens. When a lens surface was frictioned with a steel wool, and a surface hardness was observed, the surface had the sufficient surface hardness, and had the optically and surface hardnessly sufficient function as sunglasses.

An edge face of the hard-coated lens was abraded with a round edge rubbing machine, and a solvent crack test was performed by the method of Example 1, and no solvent crack occurred at a part coated with the surfactant.

Separately, the hard-coated lens was perforation-processed with an electric drill having the diameter of 1 mm. No crack occurred at a periphery of a hole.

### Example 4.

ELASTOLLAN ET598 thermoplastic polyester-based polyurethane (Shore A hardness 98) of BASF was extruded through a T die, and wound with a roll to make an unstretched continuous sheet.

This sheet was monoaxially stretched 2.2-fold (V/v=2.2) in the atmosphere at 90°C to obtain a protective sheet of polyurethane having the final thickness of about 300 µm.

A polyvinyl alcohol film was stained gray with a dichromic dye, stretched 5-fold in a monoaxial direction in a staining bath, and dried under the tension state to obtain a polarizer having the thickness of 150 µm.

The polyvinyl alcohol polarizer was held between the two polyurethane protective sheets, and these were adhered with a polyurethane-based adhesive to make a polarizing laminate having the thickness of 820 µm. The polarization degree of the resulting polarizing laminate is 97%, and the visible light transmittance is 34%.

The polarizing laminate was bending-processed by a press molding method to obtain a lens-like laminate. When one polarizing plate was held on a concave side of the lens-like laminate, and transmitted light was observed from a concave side, color heterogeneity due to the protective sheet of polyurethane was not observed. In addition, even when the same thing was performed on a convex side, and this was observed from a convex side, no color heterogeneity was observed.

A concave side of the lens-like laminate was set into a concave mold, and a cavity for molding was formed between a convex mold while sucked onto a molding surface of the concave mold with a suction pore provided in the concave mold.

In order to thermally fuse a polyamide-based resin molded body on a concave side of the lens-like laminate, TR90UV transparent nylon was insert injection-molded to make a polarizing laminate having the lens thickness of about 2.0 mm.

A silane-based thermosetting type hard-coated film having the thickness of 4 µm was imparted to both sides of the lens. When a lens surface was frictioned with a steel wool, and a surface hardness was observed, the surface had the sufficient surface hardness, and had the optically and surface hardnessly sufficient function as sunglasses.

An edge face of the hard-coated lens was abraded with a round edge rubbing machine, and a solvent crack test was performed by the method of Example 1, and no solvent crack occurred at a part coated with the surfactant.

Separately, the hard-coated lens was perforation-processed with an electric drill having the diameter of 1 mm. No crack occurred at a periphery of a hole. Example 5

TR90UV transparent nylon of EMS was extruded through a T die, and wound with a roll to make an unstretched continuous sheet.

This sheet was monoaxially stretched 1.1-fold (V/v=1.1) in the atmosphere at 162°C to obtain a protective sheet of transparent nylon having the final thickens of 350 µm.

A polyvinyl alcohol film was stained gray with a dichromic dye, stretched 5-fold in a monoaxial direction in a staining bath, and dried under the tension state to obtain a polarizer having the thickness of 150 µm.

The polyvinyl alcohol polarizer was held between the two transparent nylon protective sheets, and these were adhered with a polyurethane-based adhesive to make a polarizing laminate having the thickness of 810 µm. The polarization degree of the resulting polarizing laminate is 97%, and the visible light transmittance is 33%.

The polarizing laminate was bending-processed by a press molding method to obtain a lens-like laminate. When one polarizing plate was held on a concave side of the lens-like laminate, and transmitted light was observed from a concave side, color heterogeneity due to the protective sheet of transparent nylon was not observed. In addition, even when the same thing was performed on a convex side and this was observed from a convex side, color heterogeneity was not observed.

A convex side of the lens-like laminate was set into a concave mold, and a cavity for molding was formed between a convex mold while sucked onto a molding surface of the concave mold with a suction pore provided in the concave mold.

In order to thermally fuse a polyamide-based resin molded body on a concave side of the lens-like laminate, TR90UV transparent nylon was insert injection-molded to make a polarizing laminate having the lens thickness of about 2.0 mm.

A silane-based thermosetting type hard-coated film having the thickness of 4 µm was imparted to both sides of the lens by a dipping method. When a lens surface was frictioned with a steel wool, and a surface hardness was observed, the surface had the sufficient surface hardness, and had the optically and surface hardnessly sufficient function as sunglasses.

An edge face of the hard-coated lens was abraded with a round edge rubbing machine, and a solvent crack test was performed by the method of Example 1, and no solvent crack occurred at a part coated with the surfactant.

In addition, the hard-coated lens was perforation-processed with an electric drill having the diameter of 1 mm. No crack occurred at a periphery of a hole. Example 6

TROGAMID CX7323 transparent nylon of DEGUSSA was extruded through a T die, and wound with a roll to make an unstretched continuous sheet having the thickness of about 1 mm (V/v=1.0).

A polyvinyl alcohol film was stained gray with a dichromic dye, stretched 5-fold in a monoaxial direction in a staining bath, and dried under the tension state to obtain a polarizer having the thickness of 150 µm.

The polyvinyl alcohol polarizer was held between the two transparent nylon protective sheets, and these were adhered with a polyurethane-based adhesive to make a polarizing laminate having the thickness of about 2.3 mm. The polarization degree of the resulting polarizing laminate is 97%, and the visible light transmittance is 34%.

The polarizing laminate was bending-processed by a press molding method to obtain a lens-like laminate. When one polarizing plate was held on a concave side of the lens-like laminate, and transmitted light was observed from a concave side, color heterogeneity due to the protective sheet of transparent nylon was observed, although to a not displeased degree. In addition, even when the same thing was performed on a convex side, and this was observed from a convex side, color heterogeneity was observed, although to a not displeased degree.

A convex side of the lens-like laminate was set into a concave mold, and a cavity for molding was formed between a convex mold while sucked onto a molding surface of the concave mold with a suction pore provided in the concave mold.

In order to thermally fuse a polyamide-based resin molded body on a concave side of the lens-like laminate, TROGAMID CX7323 transparent nylon was insert injection-molded to make a polarizing laminate having the lens thickness of about 3.6 mm.

A silane-based thermosetting type hard-coated film was imparted to both sides of the lens by a dipping method. When a lens surface was frictioned with a steel wool, and a surface hardness was observed, the surface had the sufficient surface hardness, and had the optically and surface hardnessly sufficient function as sunglasses.

An edge surface of the hard-coated lens was abraded with a round edge rubbing machine, and a solvent crack test was performed by the method of Example 1, and no solvent crack occurred at a part coated with the surfactant.

Separately, the hard-coated lens was perforation-processed with an electric drill having the diameter of 1 mm. No crack occurred at a periphery of a hole. Example 7

ELASTOLLAN ET590 thermoplastic polyester-based polyurethane (Shore A hardness 90) of BASF was extruded through a T die, and wound with a roll to make an unstretched continuous sheet having the thickness of about 1 mm (V/v=1.0).

A polyvinyl alcohol film was stained gray with a dichromic dye, stretched 5-fold in a monoaxial direction in a staining bath, and dried under the tension state to obtain a polarizer having the thickness of 150 µm.

The polyvinyl alcohol polarizer was held between the two polyurethane protective sheets, these were adhered with a polyurethane based adhesive to make a polarizing laminate having the thickness of about 2.3 mm. The polarization degree of the resulting polarizing laminate is 97%, and the visible light transmittance is 33%.

The polarizing laminate was bending-processed by a press molding method to obtain a lens-like laminate. When one polarizing plate was held on a concave side of the lens-like laminate, and transmitted light was observed from a concave side, color heterogeneity due to the protective sheet of polyurethane was observed, although to a not displeased degree. In addition, when the same thing was performed on a convex side, and this was observed from a convex side, color heterogeneity was observed, although to not a displease degree.

A concave side of the lens-like laminate was set into a concave mold, and a cavity for molding was formed between a convex mold while sucked onto a molding surface of the concave mold with a suction pore provided in the concave mold.

In order to thermally fuse a polyamide-based resin molded body on a concave side of the lens-like laminate, TR90UV transparent nylon was insert injection-molded to make a polarizing laminate having the lens thickness of about 3.7 mm.

A silane-based thermosetting type hard-coated film having the thickness of 4 µm was imparted to both sides of the lens by a dipping method. When a lens surface was frictioned with a steel wool, and a surface hardness was observed, the surface had the sufficient surface hardness, and had the optically and surface hardnessly sufficient function as sunglasses.

An edge face of the hard-coated lens was abraded with a round edge rubbing machine, and a solvent crack test was performed by the method of Example 1, and no solvent crack occurred at a part coated with the surfactant.

In addition, the hard-coated lens was perforation-proceeds with an electric drill having the diameter of 1 mm. No crack occurred at a periphery of a hole.

### Comparative Example

A polycarbonate polarizing plate (thickness about 0.8 mm, gray color, polarization degree 98.5%, visible light transmittance 30%) of SUMITOBO BAKELITE Co., Ltd. in which a polarizer made of a polyvinyl alcohol is held between two polycarbonate sheets was bending-processed by a press molding method to obtain a lens-like laminate.

When one polarizing plate was held on a concave side of the lens-like laminate, and transmitted light was observed from a concave side, color heterogeneity due to the protective sheet of polycarbonate was not observed. In addition, when the same thing was performed on a convex side, and this was observed from a convex side, no color heterogeneity was observed.

A convex side of the lens-like laminate was set into a concave mold, and a cavity for molding was formed between a convex mold while sucked onto a molding surface of the concave mold with a suction pore provided in the concave mold.

In order to thermally fuse a polycarbonate molded body on a concave side of the lens-like laminate, polycarbonate of UBE INDUSTRIES, LTD. was insert injection-molded to make a polarizing laminate having the lens thickness of about 2.0 mm.

A silane-based thermosetting type hard-coated film having the thickness of 4 µm was imparted to both sides of the lens by a dipping method. When a lens surface was frictioned with a steel wool, and a surface hardness was observed, the surface had the sufficient surface hardness, and had the optically and surface hardnessly sufficient function as sunglasses.

When an edge face of the hard-coated lens was abraded with a round edge rubbing machine, and a solvent crack test was performed by the method of Example 1, many solvent cracks occurred at a part coated with the surfactant.

The hard-coated lens was perforation-processed with an electric drill having the diameter of 1 mm. A fine crack occurred at a periphery of a hole in some cases.

## Claims

1. A polarizing laminate comprising two protective sheets having approximately the same thickness, and a polarizer sheet held by them, wherein the protective sheet and the polarizer sheet are adhered, the protective sheet is any of a polyamide-based resin sheet, and a polyurethane-based resin sheet, and the laminate has the function as an optical lens.

2. The polarizing laminate according to claim 1, wherein the polarizing laminate is bending-processed.

3. The polarizing laminate according to claim 2, wherein a polyamide-based resin molded body, or a polyurethane-based resin molded body is adhered or thermally fused to a concave side of the bending-processed polarizing laminate.

4. A process for producing a polarizing laminate as defined in claim 2 or 3, which comprises injection molding a polyamide-based resin, or a polyurethane-based resin on a concave side of the bending-processed polarizing laminate.

5. A polarizing laminate comprising two protective sheets having approximately the same thickness, and a polarizer sheet held by them, wherein the protective sheet and the polarizer sheet are adhered, the protective sheet is a polyamide-based resin sheet, or a polyurethane-based resin sheet prepared in the range of a stretching rate of 1.05- to 4-fold, and the laminate has function as an optical lens.

6. The polarizing laminate according to claim 5, wherein the polarizing laminate is bending-processed.

7. The polarizing laminate according to claim 6, wherein a polyamide-based resin molded body, or a polyurethane-based resin molded body is adhered or thermally fused to a concave side of the bending-processed polarizing laminate.

8. A process for producing the polarizing laminate as defined in claim 6 or 7, comprising injection-molding a polyamide-based resin, or a polyurethane-based resin on a concave side of the bending-processed polarizing laminate.
